# EUROPEAN PATENT APPLICATION

(11) **EP 4 663 854 A1**
(43) Date of publication of application: **17.12.2025**
(21) Application number: 25175944.5
(22) Date of filing: 13.05.2025
(51) Int. Cl.: E02F 9/20, E02F 9/26

(54) **METHOD AND DEVICE FOR CONTROLLING EXCAVATOR USING STANDBY TORQUE**

(30) Priority: 13.06.2024 KR 20240077124
(71) Applicant: Volvo Construction Equipment AB, 631 85 Eskilstuna (SE)
(72) Inventor: KIM, Sung Su, 51710 Gyeongsangnam-do (KR); LEE, Chan Ho, 51710 Gyeongsangnam-do (KR)
(74) Representative: Kransell & Wennborg KB

(57) **Abstract**

According to an embodiment, disclosed are obtaining apparatus status information including at least one of weight information, position information, and torque value information according to movement for one or more working apparatuses including at least one of a boom, an arm, and a bucket included in an excavator; indicating a torque value corresponding to a time when a brake is applied to the one or more working apparatuses and determining whether a final saved torque value obtained based on the torque value information according to the movement is valid; determining, if the final saved torque value is valid, the final saved torque value as a standby torque value required for the one or more working apparatuses to maintain current position states; and a method for controlling the one or more working apparatuses based on the standby torque value at a time when the brake is released, which is a time after the time when the brake is applied, and a device and a recording medium for practicing the method.

## Description

### FIELD OF THE INVENTION

The technical field of the present disclosure relates to a method for controlling an excavator using a standby torque value and a device therefor, and relates to a technical field for controlling an excavator using a standby torque value, which determines whether a torque value saved at a time when a brake is applied to one or more working apparatuses included in the excavator is valid as a standby torque value required for the working apparatus to maintain its current position, and which thereby can effectively prevent a phenomenon in which the working apparatus falls and sags even if the state of the working apparatus changes at the time when the brake is released.

### Technology behind the invention

Previously, when the brake was applied to working apparatuses such as booms, arms, and buckets included in an excavator, an appropriate torque value for maintaining the current position was not saved, and therefore, unintended falling and sagging of the working apparatus could not be effectively prevented when the brake was released. In addition, even if the torque value is saved at the time the brake is applied to the working apparatus, a problem occurs in which the brake is released in a situation where it is not possible to determine whether the saved torque value is sufficient to support the self-weight of the working apparatus as the position or state of the working apparatus changes.

Accordingly, there is a need for a method for controlling an excavator using a standby torque value that can prevent the phenomenon of falling and sagging of the working apparatus by determining whether the torque value saved at the time the brake is applied to the working apparatus of the excavator is valid as a standby torque value for maintaining the current position of the working apparatus and thereby determining an appropriate standby torque value at the time the brake is released.

### Prior Art

### Patent document

Korean Registered Patent No. 10-1150587 (May 21, 2012), Method and system for measuring bucket force of excavator

### SUMMARY OF THE INVENTION

### Problems to be solved

In order to solve the above-described problem, the present disclosure discloses a method and device for controlling an excavator according to whether a torque value saved at a time when a brake is applied to one or more working apparatuses included in the excavator is valid as a standby torque value required for the working apparatus to maintain its current position state at a time when the brake is released, and a method for, if it is determined that the torque value saved at the time when the brake is applied to the working apparatus is valid at the time when the brake is released, efficiently preventing a phenomenon in which the working apparatus falls and sags by determining the saved torque value as a standby torque value.

The problems to be solved in the present disclosure are not limited to the problems mentioned above, and other problems not mentioned will be clearly understood by those skilled in the art from the description below.

### Means of solving the problems

As a technical means for achieving the above-described technical tasks, a method for controlling an excavator using a standby torque value according to a first aspect of the present disclosure may comprise: obtaining apparatus status information including at least one of weight information, position information, and torque value information according to the movement for one or more working apparatuses including at least one of a boom, an arm, and a bucket included in the excavator; determining whether a final saved torque value obtained based on the torque value information according to the movement is valid and indicating a torque value corresponding to a time when a brake is applied to the one or more working apparatuses; determining the final saved torque value as a standby torque value required for the one or more working apparatuses to maintain their current position states if the final saved torque value is valid; and controlling the one or more working apparatuses based on the standby torque value at a time when the brake is released, which is a time after the time when the brake is applied.

Optionally, in some examples, the determining whether the final saved torque value is valid may determine whether the final saved torque value is valid based on at least one of whether the final saved torque value is saved in a memory, a time elapsed since the final saved torque value was saved in the memory, and whether positions of the one or more working apparatuses have been updated since the final saved torque value was saved in the memory.

Optionally, in some examples, if the final saved torque value is invalid, the method may further comprise: obtaining a standby torque value table including a plurality of expected standby torque values corresponding to a plurality of positional relationships of the one or more working apparatuses; and determining a final expected torque value determined using the standby torque value table as the standby torque value.

Optionally, in some examples, the determining the final expected torque value as the standby torque value may comprise: determining a first positional relationship representing a positional relationship of the one or more working apparatuses at a time when the brake is applied; determining a second positional relationship representing a positional relationship of the one or more working apparatuses at a time when the brake is released; determining a first expected torque value corresponding to the first positional relationship based on the standby torque value table; determining a second expected torque value corresponding to the second positional relationship based on the standby torque value table; and determining the final expected torque value based on the final saved torque value, the first expected torque value, and the second expected torque value.

Optionally, in some examples, the determining the final expected torque value based on the final saved torque value, the first expected torque value and the second expected torque value may determine the final expected torque value such that a ratio between the first expected torque value and the second expected torque value and a ratio between the final saved torque value and the final expected torque value correspond to each other.

Optionally, in some examples, the determining the final expected torque value may further comprise: obtaining first bucket weight information representing the weight information for the bucket at a time when the brake is applied; obtaining second bucket weight information representing the weight information for the bucket at a time when the brake is released; and determining the final expected torque value by reflecting a comparison result for the first and second bucket weight information.

Optionally, in some examples, the method may further comprise updating the standby torque value determined according to the determined final expected torque value to a corresponding one of the plurality of standby torque values included in the standby torque value table.

Optionally, in some examples, if the final saved torque value is invalid, the method may further comprise determining a maximum torque value of an electric motor included in the one or more working apparatuses as the standby torque value.

Optionally, in some examples, if the final saved torque value is invalid, the method may further comprise: determining a second positional relationship representing a positional relationship of the one or more working apparatuses at a time when the brake is released; obtaining center of gravity information for the one or more working apparatuses according to the second positional relationship; determining a final calculated torque value based on the center of gravity information; and determining the final calculated torque value as the standby torque value.

Optionally, in some examples, the determining the final calculated torque value may comprise: determining a first positional relationship representing a positional relationship of the one or more working apparatuses at a time when the brake is applied; obtaining at least one of acceleration information or angular rate information for the one or more working apparatuses as the one or more working apparatuses change from the first positional relationship to the second positional relationship; and determining the final calculated torque value based on the center of gravity information and at least one of the acceleration information or the angular rate information.

A device for controlling an excavator using a standby torque value according to a second aspect of the present disclosure may comprise: a receiving unit for obtaining apparatus status information including at least one of weight information, position information, and torque value information according to the movement for one or more working apparatuses including at least one of a boom, an arm, and a bucket included in the excavator; a processor for determining whether a final saved torque value obtained based on the torque value information according to the movement is valid and indicating a torque value corresponding to a time when a brake is applied to the one or more working apparatuses, and for determining the final saved torque value as a standby torque value required for the one or more working apparatuses to maintain their current position states if the final saved torque value is valid; and a control unit for controlling the one or more working apparatuses based on the standby torque value at a time when the brake is released, which is a time after the time when the brake is applied.

Optionally, in some examples, the third aspect of the present disclosure may provide a computer-readable recording medium on which a program for executing the method of the first aspect on a computer is recorded.

Optionally, in some examples, the fourth aspect of the present disclosure may provide a computer program including program codes for implementing the method of the first aspect and saved on a recording medium.

At least one of the disclosed aspects, examples and claims may be suitably combined with one another as would be apparent to those skilled in the art. Additional features and advantages are set forth in the following description, claims, and figures, and in part will be readily apparent to those skilled in the art from the foregoing or will be appreciated by practicing the disclosure as described herein. Also disclosed are computer systems, control units, code modules, computer-implemented methods, computer-readable medium and computer program products associated with the aforementioned technical advantages.

### SUMMARY OF THE INVENTION

According to an embodiment of the present disclosure, there is an effect of preventing unintended falling and sagging of the working apparatus by determining a standby torque value required for the working apparatus to maintain the current position state based on whether a torque value saved at a time when the brake is applied to one or more working apparatuses included in an excavator is valid.

In addition, by using a standby torque value table including the expected standby torque values corresponding to the positional relationship for one or more working appratuses, there is an effect of increasing stability in the working environment by determining the expected standby torque value even if the position of the working appratus at the time of brake application has changed at the time of brake release.

The effects of the present disclosure are not limited to the above-mentioned effects, and other effects not mentioned will be clearly understood by those skilled in the art from the description below.

### Brief description of the drawings

FIG. 1 is a schematic diagram showing an example of a configuration of a device according to an embodiment.
FIG. 2 is a flow chart illustrating a method in which a device according to an embodiment operates.
FIG. 3 is a drawing illustrating an example of a device according to an embodiment for obtaining apparatus status information for one or more working apparatuses included in an excavator.
FIG. 4 is a drawing schematically illustrating an example in which a device, if a final saved torque value is valid, determines the final saved torque value as a standby torque value according to an embodiment.
FIG. 5 is a diagram illustrating an example in which a device determines a final expected torque value based on a final saved torque value, a first expected torque value, and a second expected torque value according to an embodiment.
FIG. 6 is a diagram illustrating an example in which a device determines a final expected torque value such that a ratio between a first expected torque value and a second expected torque value and a ratio between a final saved torque value and a final expected torque value correspond to each other according to an embodiment.
FIG. 7 is a diagram schematically illustrating an example of a process in which a device determines a standby torque value from the time a brake is applied to one or more working apparatuses to the time the brake is released and controls based on this according to an embodiment.
FIG. 8 is a diagram illustrating an example of providing control information to a user device according to which a device controls one or more working apparatuses based on a determined standby torque value according to an embodiment.

### DETAILED DESCRIPTION OF THE INVENTION

The advantages and features and the methods for achieving them in the present disclosure will become apparent with reference to the embodiments described below in detail together with the accompanying drawings. However, the present disclosure is not limited to the embodiments disclosed below and may be implemented in various different forms, and the present embodiments are provided only to make the disclosure complete and fully inform those skilled in the art of the scope of the present disclosure.

The terms used herein are for the purpose of describing embodiments only and are not intended to limit the present disclosure. In this specification, singular forms also include plural forms unless specifically stated otherwise in the text. The terms "comprises" and/or "comprising" used in the specification do not exclude the presence or addition of one or more other components other than the components stated. Like reference numerals throughout the specification refer to like components, and "and/or" includes each and every combination of one or more of the mentioned components. Although "first", "second", and the like are used to describe various components, these components are, of course, not limited by these terms. These terms are only used to distinguish one component from another. Accordingly, it goes without saying that the first component mentioned below may also be the second component within the technical concept of the present disclosure.

Unless otherwise defined, all terms (including technical and scientific terms) used in the present specification may be used in a meaning commonly understood by those skilled in the art. Additionally, terms defined in commonly used dictionaries are not to be interpreted ideally or excessively unless explicitly and specifically defined otherwise.

Spatially relative terms such as "below," "beneath," "lower," "above," and "upper" may be used to easily describe the relationship of one component to other components as illustrated in the drawings. Spatially relative terms should be understood to include different orientations of components when in use or operation in addition to the orientations depicted in the drawings. For example, when components depicted in a drawing are flipped, a component described as "below" or "beneath" another component may end up being placed "above" the another component. Thus, the exemplary term "below" may include both downward and upward directions. Components may also be oriented in different directions, and thus spatially relative terms may be interpreted according to their orientation.

Hereinafter, various embodiments will be described in detail with reference to the drawings.

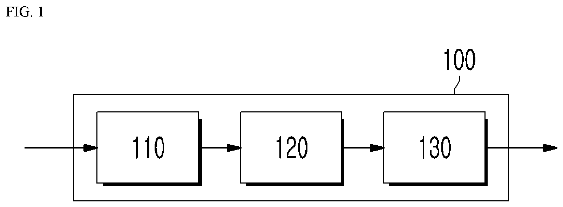

FIG. 1 is a schematic diagram showing an example of a configuration of a device 100 according to an embodiment.

Referring to FIG. 1, the device 100 may include a receiving unit 110, a processor 120, and a control unit 130. However, not all of the components illustrated in FIG. 1 are essential components of the device 100. The device 100 may be implemented with more components than those illustrated in FIG. 1, or the device 100 may be implemented with fewer components than those illustrated in FIG. 1.

For example, the device 100 according to an embodiment may further include a memory (not shown). As another example, the control unit 130 according to an embodiment may include a display (not shown).

The device 100 according to an embodiment represents a computing device capable of determining an operation pattern or an operation pattern group of an excavator, and in an embodiment, may be implemented as a desktop PC, a tablet, a laptop, or the like, or may be implemented as a computing device such as a smartphone. The device 100 according to an embodiment may be included inside the excavator or may be located outside the excavator, such as on a server.

According to an embodiment, a receiving unit 110 obtains apparatus status information including at least one of weight information, position information, and torque value information according to movement for one or more working apparatuses including at least one of a boom, an arm, and a bucket included in an excavator.

The receiving unit 110 according to an embodiment obtains a demand from a user's input or operation to control an electric motor that provides power to the movement of one or more working apparatuses.

The receiving unit 110 according to an embodiment may obtain torque value information according to movement saved in an electronic control unit, and the torque value information according to movements for each of one or more working apparatuses corresponding to the time when the brake is applied or when the brake is released may be updated over time.

The processor 120 according to an embodiment obtains apparatus status information for one or more working apparatuses from the receiving unit 110, indicates a torque value corresponding to the time when the brake is applied to one or more working apparatuses, and determines whether a final saved torque value obtained based on torque value information according to movement is valid.

The processor 120 according to an embodiment determines, if the final saved torque value is valid, the final saved torque value as a standby torque value required for one or more working apparatuses to maintain the current position state.

The control unit 130 according to an embodiment controls one or more working apparatuses based on a standby torque value at the time the brake is released, which is a time after the time the brake is applied. Additionally, a demand obtained from a lever included in the excavator may be applied to an electric motor to control one or more working apparatuses according to the obtained torque value.

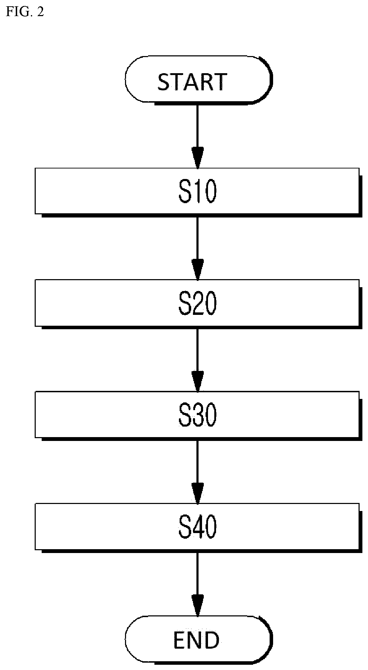

FIG. 2 is a flow chart illustrating a method in which a device 100 according to an embodiment operates.

Referring to step S10, the receiving unit 110 according to an embodiment obtains apparatus status information including at least one of weight information, position information, and torque value information according to movement for one or more working apparatuses including at least one of a boom, an arm, and a bucket included in an excavator.

As an example, when the operation status of an excavator is in a non-operating state, the device 100 may obtain apparatus status information for one or more working apparatuses. Specifically, a non-operating condition may mean that a brake is applied one or more working apparatuses included in the excavator, and restricts movement. Accordingly, the device 100, including soil (e.g., silt) contained in one working apparatus (e.g., bucket), may obtain apparatus status information including weight information thereon.

As an example, the device 100 may obtain different apparatus status information for each of the boom, arm, and bucket included in the excavator from sensors. Specifically, the device 100 may obtain weight information for the boom (e.g., 3 tons), weight information for the arm (e.g., 2 tons), and weight information for the bucket (e.g., 1 ton) for each apparatus status information. Furthermore, each apparatus status information may include position information for each working apparatus, and the device 100 may obtain location information corresponding to each working apparatus in the form of coordinates (e.g., x-axis, y-axis, z-axis).

As another example, the device 100 may obtain torque value information according to movement for each of one or more working apparatuses included in the excavator. For example, it may mean a torque value generated in an electric motor by obtaining a demand from a user to control the electric motor that provides power to the movement of one or more working apparatuses. Therefore, over time, the device 100 may obtain apparatus status information, including torque value information (e.g., 20 Nm) according to movement for each of one or more working apparatuses.

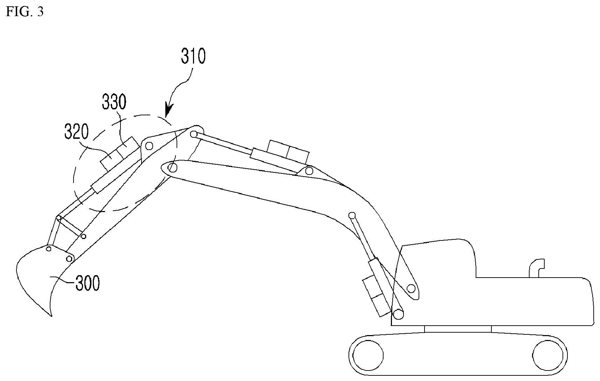

FIG. 3 is a drawing illustrating an example of a device 100 according to an embodiment for obtaining apparatus status information for one or more working apparatuses included in an excavator.

Referring to FIG. 3, each of one or more working apparatuses, i.e., a boom, an arm and a bucket 300, may include an actuator 310 including an electric motor 320 and a brake 330. In detail, the device 100 may provide power for the movement of a bucket 300 to the electric motor 320 included in the actuator 310 to obtain a torque value (e.g., 30 Nm) according to the movement, and may control the movement of the bucket 300 using a brake 330.

Without being limited thereto, different actuators 310 may be used for each working apparatus, and for example, a mixture of hydraulic actuators and electric actuators may be used for each working apparatus.

As another example, the actuators 310 used for each of the one or more working apparatuses may be EMAs (Electro Mechanical Actuators) that converts rotary motion into linear motion, and the type of the EMA may be any one of a screw type or a rack and pinion type. Furthermore, the EMA may include the electric motor 320 and the brake 330, and the device 100 may obtain apparatus status information including weight information, position information, and torque value information according to movement for the boom, arm, and bucket 300 from each EMA.

Specifically, position information for one or more working apparatuses may be measured from an Inertial Measurement Unit (IMU), which is an inertial measurement apparatus for each of the boom, arm, and bucket 300 included in the excavator. The IMU may include an acceleration sensor, an angular rate sensor (gyroscope), and, if necessary, a magnetometer and additional sensors to measure position information for each working apparatus. For example, the device 100 may calculate the force acting in the direction of gravity on each of the boom, arm, and bucket 300 from one or more acceleration sensors to calculate the angles of inclination in the direction of each of the X, Y, and Z axes. Based on the calculated angles, the device 100 may obtain position information for each working apparatus corresponding to the movement using the angular rate sensor included in the IMU.

Without being limited thereto, the device 100 may additionally obtain apparatus status information, which is used to determine the standby torque value required for one or more working apparatuses to maintain the current position state, using additional sensors or from user selection input.

Referring to step S20, the device 100 according to an embodiment indicates a torque value corresponding to the time when the brake 330 is applied on one or more working apparatuses, and determines whether the final saved torque value obtained based on the torque value information according to the movement is valid.

As an example, the final saved torque value may mean the most recently saved torque value corresponding to the time at which an applying signal or applying command for the brake 330 included in one or more working apparatuses is obtained from the device 100 or from the user. For example, the torque value information according to movement may be monitored over time, and among the obtained torque values according to the movement, the device 100 may store the final saved torque value (e.g., 50 Nm) for one or more working apparatuses between the time when the brake 330 is applied and the preset applying storage time (e.g., 0.01 sec) before that.

The device 100 according to an embodiment may determine whether a final saved torque value is valid based on at least one of whether the final saved torque value is saved in a memory, a time elapsed since the final saved torque value was saved in the memory, and whether positions of one or more working apparatuses have been updated since the final saved torque value was saved in the memory.

For example, if it is not saved whether the final saved torque value is saved in the memory, the device 100 may determine whether the final saved torque value is valid as invalid. As another example, if the elapsed time since the final saved torque value was saved in the memory is longer than the preset storage elapsed time (e.g., 1 year), the device 100 may determine whether the final torque value is valid as invalid. As another example, if whether the positions of one or more working apparatuses have been updated since the final saved torque value was saved in the memory is in update state, the device 100 may determine whether the final saved torque value is valid as invalid.

As an effect of this, since it is determined whether the final saved torque value is valid based on whether the positions of one or more working apparatuses have been updated since the final saved torque value was saved in the memory, even if the positions of one or more working apparatuses change at the time the brake 330 is released, it is possible to determine an appropriate standby torque value that can prevent falling and sagging phenomena of one or more working apparatuses as much as possible instead of an invalid final saved torque value.

Referring to step S30, the device 100 according to an embodiment, if the final saved torque value is valid, determines the final saved torque value as a standby torque value required for one or more working apparatuses to maintain the current position state.

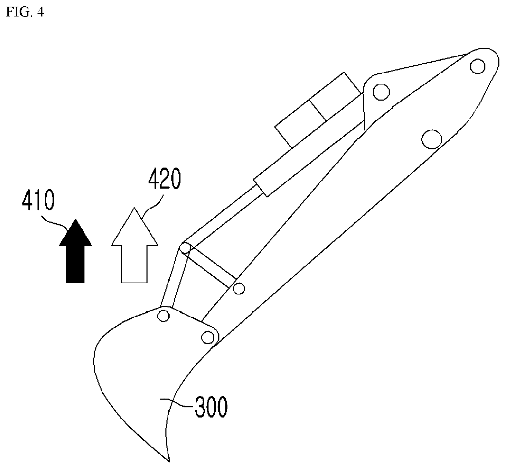

FIG. 4 is a drawing schematically illustrating an example in which a device, if a final saved torque value 410 is valid, determines the final saved torque value 410 as a standby torque value 420 according to an embodiment.

Referring to FIG. 4, if whether the final saved torque value 410 described above in step S20 is valid is valid, it may mean that the current position state of the bucket 300 can be maintained even if the final saved torque value 410 is determined as the standby torque value 420. Accordingly, if whether the final saved torque value 410 is saved in the memory is in the saved state, or the elapsed time since the final saved torque value 410 was saved in the memory is shorter than the preset storage elapsed time, or if whether the positions of one or more working apparatuses have been updated since the final saved torque value was saved in the memory is in the non-updated state, the device 100 may determine the final saved torque value 410 as the standby torque value 420 required for one or more working apparatuses to maintain the current position state.

As an effect of this, if the final saved torque value 410 is valid, the final saved torque value 410 is determined as the standby torque value 420, thereby minimizing the time delay for determining the standby torque value 420 and quickly preventing the phenomenon of sagging and falling at the time of releasing the brake 330 applied to one or more working apparatuses.

The device 100 according to an embodiment, if the final saved torque value is invalid, may obtain a standby torque value table including a plurality of standby torque values expected in response to a plurality of positional relationships of one or more working apparatuses and may determine the final expected torque value determined using the standby torque value table as the standby torque value 420.

For example, if the final saved torque value is invalid, it may mean that the final saved torque value cannot be used as a standby torque value required for one or more working apparatuses to maintain the current position state. Additionally, the standby torque value table may be a table preset by a user, and each time a standby torque value 420 is obtained, the device 100 may update a plurality of expected standby torque values 420 corresponding to a plurality of positional relationships included in the standby torque value table.

Specifically, the positional relationship for one or more working apparatuses (e.g., buckets) may mean a distance in coordinate information corresponding to a center point of one or more working apparatuses from a reference center point included in the excavator. For example, the device 100 may determine the center point of the upper body included in the excavator as the reference center point and determine the distance from the reference center point to the center point of the bucket 300 as the positional relationship with respect to the bucket 300.

Without being limited thereto, the device 100 may obtain a reference center point from a user's input, and determine the positional relationships of the working apparatuses based on coordinate information corresponding to the center point of each of the plurality of working apparatuses instead of the center point of the upper body.

A device 100 according to an embodiment may determine a first positional relationship representing a positional relationship of one or more working apparatuses at a time when a brake 330 is applied, may determine a second positional relationship representing a positional relationship of one or more working apparatuses at a time when the brake 330 is released, may determine a first expected torque value corresponding to the first positional relationship based on a standby torque value table, may determine a second expected torque value corresponding to the second positional relationship based on the standby torque value table, and may determine a final expected torque value based on the final saved torque value, the first expected torque value, and the second expected torque value.

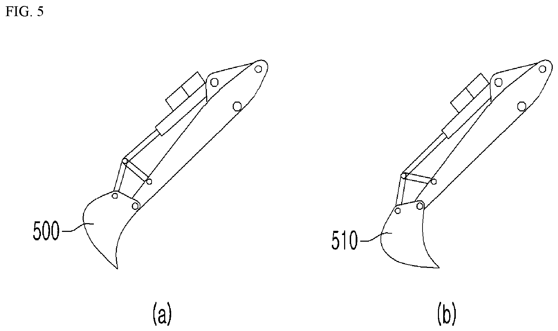

FIG. 5 is a diagram illustrating an example in which a device 100 determines a final expected torque value based on a final saved torque value, a first expected torque value 501, and a second expected torque value 511 according to an embodiment.

Referring to FIG. 5, shown are a first position relationship 500 which represents a positional relationship from a reference center point to the center point of the bucket 300 at the time when the brake 330 is applied and a second position relationship 510 which represents a positional relationship from the reference center point to the center point of the bucket 300 at the time when the brake 330 is released, and this may ultimately mean that the final saved torque value is invalid depending on if whether the position of the bucket 300 has been updated is in updated state. Accordingly, in order to determine the final expected torque value, the device 100 may determine the first expected torque value (e.g., 50 Nm) 501 expected in response to the first positional relationship 500 based on the standby torque value table. Additionally, the device 100 may determine the second expected torque value (e.g., 100 Nm) 511 expected in response to the second positional relationship 510 based on the standby torque value table.

The device 100 according to an embodiment may determine the final expected torque value such that a ratio between the first expected torque value 501 and the second expected torque value 511 and a ratio between the final saved torque value and the final expected torque value correspond to each other.

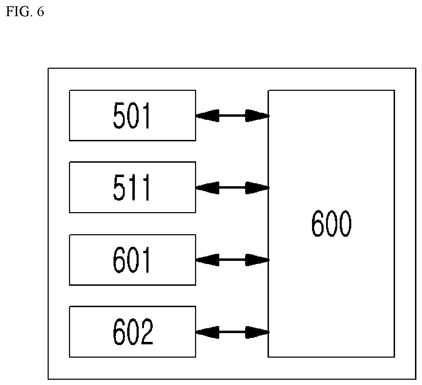

FIG. 6 is a diagram illustrating an example in which a device 100 determines a final expected torque value 602 such that a ratio between a first expected torque value 501 and a second expected torque value 511 and a ratio between a final saved torque value 601 and a final expected torque value 602 correspond to each other according to an embodiment.

For example, the device 100 may determine a ratio (e.g., 1:2) of the first expected torque value 501 of 50 Nm and the second expected torque value 511 of 100 Nm and reflect this in the final saved torque value (e.g., 25 Nm) 601 representing the torque value corresponding to the time when the brake 330 is applied on one or more working apparatuses, thereby determining the final expected torque value (e.g., 50 Nm) 602. Without being limited thereto, the device 100 may additionally obtain a ratio (e.g., 1:3) from a selection input of a user account and obtain a final expected torque value 602 determined from a calculation unit 600 included in the device 100. Without being limited thereto, a final expected torque value 602 may be obtained from a calculation unit 600 included in the device 100 which is calculated so that the ratio between the first expected torque value 501 and the second expected torque value 511 and the ratio between the final saved torque value 601 and the final expected torque value 602 correspond to each other.

The device 100 according to an embodiment may obtain first bucket weight information indicating weight information for the bucket 300 at the time when the brake 330 is applied, may obtain second bucket weight information indicating weight information for the bucket at the time when the brake 330 is released, and may determine the final expected torque value 602 by reflecting the comparison result for the first and second bucket weight information.

The device 100 according to an embodiment may obtain the first and second bucket weight information in different ways depending on the type of actuator 310. When the type of actuator 310 is a hydraulic cylinder, the device 100 may obtain the first and second bucket weight information based on real-time monitored pressure values for the hydraulic cylinder included in one or more working apparatuses (e.g., booms) and weight information, angle information, and center of gravity information for one or more working apparatuses. In addition, when the type of actuator 310 is EMA, the device 100 may obtain the first and second bucket weight information based on the electric motor value generated from the electric motor 320 of the EMA included in one or more working apparatuses (e.g., booms) and monitored in real time and the weight information, angle information, and center of gravity information for one or more working apparatuses.

As another example, the device 100 may obtain an actuator reference table including any one of a plurality of electric motor torque values or a plurality of pressure values expected in response to a plurality of positional relationships of one or more working apparatuses. Based on the actuator reference table, the device 100 may obtain the first and second bucket weight information corresponding to either a real-time monitored pressure value for the hydraulic cylinder or an electric motor value generated from the electric motor 320 of the EMA and monitored in real-time. In detail, when the actuator corresponds to the EMA, the device 100 may obtain a first electric motor value corresponding to the first positional relationship based on the actuator reference table and obtain a second electric motor value corresponding to the second positional relationship according to real-time monitoring, and thereby obtain the first and second bucket weight information according to the comparison result of the first electric motor value and the second electric motor value.

For example, when the working apparatus is the bucket 300, soil may be contained in the bucket 300, so different weight information may be obtained at the time when the brake 330 is applied to the bucket 300 and at the time when the brake 330 is released. Accordingly, in the process of determining the standby torque value 420 based on the final expected torque value 602 determined using the standby torque value table, the device 100 may be interpreted as obtaining the first and second bucket weight information for the bucket 300 corresponding to the time when the brake 330 is applied and the time when the brake 330 is released, respectively, and determining the final expected torque value 602 reflecting the comparison result thereof. Specifically, if the first bucket weight information (e.g., 200 kg) and the second bucket weight information (e.g., 150 kg) are obtained, it can be interpreted that some of the soil contained inside the bucket 300 is missing due to the movement of the bucket 300, and accordingly, the device 100 may determine the final expected torque value (e.g., 40 Nm) 602 that reflects the comparison result (e.g., 50 kg), which is the difference value between the first bucket weight information and the second bucket weight information.

In order to explain specifically, examples are given below of different cases where the first difference value (e.g., 50 kg) and the second difference value (e.g., 100 kg) representing the changes in bucket weight information are determined as comparison results. For example, since the first difference value is a smaller value than the second difference value, this may mean that the change from the amount or volume of soil contained within the bucket at the time the brake 330 is applied to the amount or volume of soil contained within the bucket at the time the brake 330 is released is smaller, i.e., this may be interpreted as a case where a smaller amount of soil falls out of the bucket. Thus, while the previous example described an example in which the final expected torque value (50 Nm) 602 was determined such that the ratio of the first expected torque value 501 and the second expected torque value 511 and the ratio of the final saved torque value and the final expected torque value 602 corresponded to each other, this example discloses a case in which the first difference value or the second difference value is reflected in the final expected torque value 602. In other words, since the second difference value is greater than the first difference value, the final expected torque value 602 determined by reflecting the second difference value may be determined to be lower than the final expected torque value 602 determined by reflecting the first difference value. Accordingly, if the comparison result is determined as the second difference value, the device 100 may determine the final expected torque value (e.g., 40 Nm) 602 reflecting this, and on the other hand, if the comparison result is determined as the first difference value, the device 100 may determine different final expected torque values 602 as the final expected torque value (e.g., 45 Nm) 602 reflecting this by reflecting the comparison result according to each situation.

As an effect of this, the comparison result, which is the difference value between the first and second bucket weight information, is reflected in the final expected torque value 602, so that the standby torque value 420 required for one or more working apparatuses to maintain the current position state can be efficiently determined according to the situation. In other words, since the amount of soil contained inside the bucket at the time the brake 330 is applied is reflected to fall significantly outside the bucket at the time the brake 330 is released, even if the standby torque value 420 is lower than the existing final expected torque value 602, the torque value may be sufficient for one or more working apparatuses to maintain the current position state. Accordingly, the user can control one or more working apparatuses more quickly without sagging or falling by using an appropriate standby torque value 420 without having to increase the motor torque value unnecessarily.

As another example, a final expected torque value 602 for one or more working apparatuses determined using a standby torque value table may be determined by adding an additional expected torque value determined as the first and second bucket weight information changes, and this can be determined as the standby torque value 402. In detail, the additional expected torque value, when the first bucket weight information corresponding to the time when the brake is applied is different from the second bucket weight information corresponding to the time when the brake is released, may mean a torque value additionally required for one or more working apparatuses to maintain the current position in the device 100 as the first bucket weight information and the second bucket weight information change. Accordingly, the device 100 can add an additional expected torque value determined based on a difference value between the first and second bucket weight information to a second expected torque value corresponding to a second positional relationship for one or more working apparatuses (e.g., booms), and thereby determine a final expected torque value 602 using the standby torque value table.

As another example, when the first and second bucket weight information is obtained differently and one or more working apparatuses are booms, the device 100 may further obtain center of gravity distance information indicating the distance between the center of gravity of the bucket and the center of gravity of the booms by including it in the apparatus status information obtained. In other words, the center of gravity distance information may include a first center of gravity distance corresponding to the first positional relationship and a second center of gravity distance corresponding to the second positional relationship. Accordingly, the device 100 may determine a rotation center torque value representing a torque value applied to an actuator 310 included in the boom as the first center of gravity distance changes to the second center of gravity distance. Accordingly, as the first and second bucket weight information are different and the first center of gravity distance changes to the second center distance, the device 100 may determine the rotation center torque value applied to the boom as the standby torque value 420 for the boom.

As an effect of this, when the working apparatus is a bucket 300, not only is the final expected torque value 602 determined based on the first and second expected torque values 501, 511 corresponding to the positional relationship at the time the brake 330 is applied and the positional relationship at the time the brake 330 is released, respectively, but also, when the weight for the bucket 300 is reduced at the time the brake 330 is released, a torque value lower than the existing final expected torque value 602 is determined as the standby torque value 420 in order to effectively prevent the sagging and falling phenomenon of the bucket 300, so that the user can more quickly reach the torque value to the standby torque value 420.

The device 100 according to an embodiment may update the determined standby torque value 420 according to the determined final expected torque value 602 to a corresponding one of a plurality of standby torque values included in the standby torque value table.

For example, if the final expected torque value (e.g., 40 Nm) 602 is determined and the standby torque value (e.g., 40 Nm) is determined accordingly, the device 100 can replace the determined standby torque value 420 with the corresponding existing standby torque value (e.g., 30 Nm) 420 among the plurality of standby torque values included in the standby torque value table and update it with the updated standby torque value (e.g., 40 Nm). Accordingly, when the first or second expected torque value 501, 511 corresponding to the positional relationship is determined later based on the standby torque value table, the device 100 can determine the first or second expected torque value 501, 511 corresponding to the updated standby torque value.

As an effect of this, as the updated standby torque value is continuously updated in the standby torque value table, the device 100 can determine a precise final expected torque value 602 and thus determine a precise standby torque value 420 required for one or more working apparatuses to maintain the current position state.

The device 100 according to an embodiment, if the final saved torque value 601 is invalid, may determine the maximum torque value of an electric motor 320 included in one or more working apparatuses as the standby torque value 420.

For example, if whether the final saved torque value 601 is saved in the memory is not saved or if the elapsed time since the final saved torque value 601 was saved in the memory is a preset maximum elapsed time (e.g., 3 years), it can be interpreted that the saved final saved torque value 601 is invalid, and the device 100 may determine the maximum torque value (e.g., 200 Nm) of the electric motor 320 included in the working apparatus as the standby torque value 420. Accordingly, the user can stably control the working apparatus by determining the maximum torque value of the electric motor 320 as the standby torque value 420 since there is no final saved torque value 601 that can be used to prevent sagging and falling of one or more working apparatuses.

The device 100 according to an embodiment may determine a second positional relationship 510 representing a positional relationship of one or more working apparatuses at a time when the brake 330 is released, obtain center of gravity information for one or more working apparatuses according to the second positional relationship 510, determine a final calculated torque value based on the center of gravity information, and determine the final calculated torque value as a standby torque value 420.

The device 100 according to an embodiment may determine a first positional relationship 500 representing a positional relationship of one or more working apparatuses at a time when the brake 330 is applied, obtain at least any one of acceleration information and angular rate information for one or more working apparatuses as the one or more working apparatuses change from the first positional relationship 500 to the second positional relationship 510, and determine a final calculated torque value based on at least any one of the center of gravity information and the acceleration information or the angular rate information.

For example, by obtaining center of gravity information for one or more working apparatuses, the device 100 may determine the final calculated torque value calculated based on this as the standby torque value 420. Additionally, the device 100 may obtain acceleration information or angular rate information for one or more working apparatuses as the first positional relationship 500 representing the positional relationship of one or more working apparatuses at the time the brake 330 is applied changes to the second positional relationship 510 representing the positional relationship of one or more working apparatuses at the time the brake 330 is released. Specifically, in other words, the apparatus status information may further include sum vector information according to acceleration or angular rate information for the movement of one or more working apparatuses. The sum vector information may mean a sum of vectors that combine vectors containing directions for the movements of each working apparatus, and may be obtained over time and may be saved in a database whenever the positions of one or more working apparatuses change.

Accordingly, if the final saved torque value is invalid, the device 100 can obtain vector values corresponding to the first and second positional relationships for one or more working apparatuses from the apparatus status information, respectively, and obtain a sum vector value by adding them. As the first position relationship changes to the second position relationship, the device 100 can determine the final calculated torque value converted from the sum vector value based on the center of gravity and determine this as the standby torque value 420 required for one or more working apparatuses to maintain the current position state.

The device 100 according to an embodiment, when the final saved torque value 601 is invalid and the reliability level for the final calculated torque value is lower than or equal to a preset reliability level, may determine the final expected torque value 602 using the standby torque value table. In other words, it can mean a situation where the standby torque value 420 is determined as either the final calculated torque value or the final expected torque value 602 in a situation where the final saved torque value is invalid. Accordingly, based on the history of standby torque values 420 obtained from the database and determined from past final calculated torque values, the device 100 may determine the reliability level for the final calculated torque value. As a result, if the reliability level for the final calculated torque value is below a preset level (e.g., calculation error level), the device 100 may determine the final expected torque value 602 determined using the standby torque value table as the standby torque value 420 instead of determining the final calculated torque value.

As an effect of this, since the reliability of the final calculated torque value according to the calculation is low, the final expected torque value 602 with higher reliability is determined using the standby torque value table, thereby minimizing the error probability for the standby torque value 420.

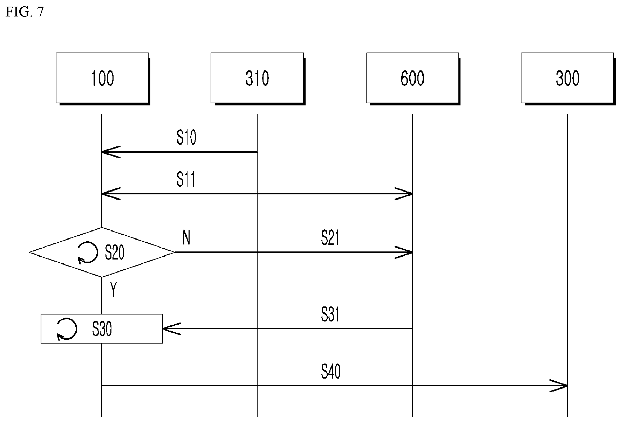

FIG. 7 is a diagram schematically illustrating an example of a process in which a device 100 determines a standby torque value 420 from the time a brake 330 is applied to one or more working apparatuses to the time the brake 330 is released and controls based on this according to an embodiment.

Referring to FIG. 7, the device 100 may obtain apparatus status information including at least one of weight information and position information for one or more working apparatuses including at least one of a boom, an arm, and a bucket 300 included in an excavator from an actuator 310 included in each of one or more working apparatuses (S10). Furthermore, the device 100 may display a torque value corresponding to the time at which the brake 330 is applied, and obtain torque value information according to movement for one or more working apparatuses obtained based on torque value information according to movement (S11). Accordingly, the device 100 may determine whether the obtained final saved torque value is valid (S20), and if the final saved torque value 601 is invalid, it can request to the calculating unit 600 (S21) to obtain the calculated final expected torque value 602 and determine it as the standby torque value 420 (S31). On the other hand, if the final saved torque value 410 is valid, the device 100 may determine the final saved torque value 410 as the standby torque value 420 required for one or more working apparatuses to maintain the current position state (S30). Next, the device 100 may control one or more working apparatuses based on the standby torque value 420 at the time the brake 330 is released, which is a time after the time the brake 330 is applied (S40).

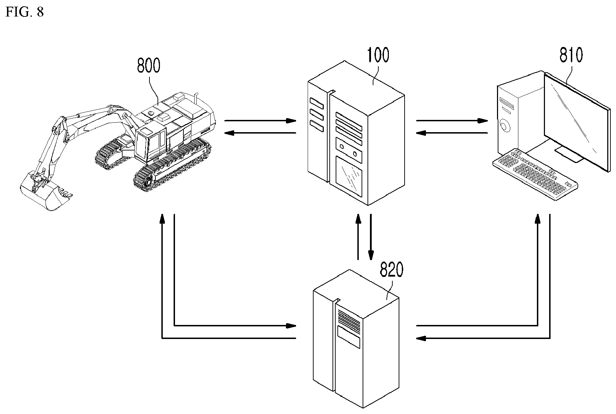

FIG. 8 is a diagram illustrating an example of providing control information to a user device according to which a device 100 controls one or more working apparatuses based on a determined standby torque value 420.

Referring to FIG. 8, the device 100 may obtain apparatus status information including at least one of weight information, position information, and torque value information according to movement for one or more working apparatuses including at least one of a boom, an arm, and a bucket 300 included in an excavator from a database. In addition, it is possible to indicate a torque value corresponding to the time when the brake 330 is applied on one or more working apparatuses, and determine whether the final saved torque value obtained based on the torque value information according to the movement is valid and send the validity information thereon to the user device 810. Additionally, if the final saved torque value 410 is valid, the device 100 may determine the final saved torque value 410 as the standby torque value 420 required for one or more working apparatuses to maintain the current position state and store it in the database 820. Accordingly, the device 100 may send a control command to the excavator to control one or more working apparatuses based on the standby torque value 420 at the time the brake 330 is released, which is a time after the time the brake 330 is applied.

Various embodiments of the present disclosure may be implemented as software including one or more instructions saved in a storage medium (e.g., a memory) readable by a machine (e.g., a display apparatus or a computer). For example, a processor of the machine (e.g., processor 120) may call at least one instruction from one or more instructions saved from a storage medium and execute it. This enables the machine to be operated to perform at least one function in accordance with at least one instruction called above. The one or more instructions may include codes generated by a compiler or codes executable by an interpreter. The machine-readable storage medium may be provided in the form of a non-transitory storage medium. Here, 'non-transitory' simply means that the storage medium is a tangible apparatus and does not contain signals (e.g. electromagnetic waves), and the term does not distinguish between cases where data is saved semi-permanently or temporarily on the storage medium.

According to an embodiment, the methods according to various embodiments disclosed in the present disclosure may be provided as included in a computer program product. The computer program product may be traded between sellers and buyers as a commodity. The computer program product may be distributed in the form of a machine-readable storage medium (e.g., a compact disc read only memory (CD-ROM)), or may be distributed online (e.g., by downloading or uploading) via an application store (e.g., Play StoreTM) or directly between two user apparatuses (e.g., smartphones). In the case of online distribution, at least a portion of the computer program product may be temporarily saved or temporarily created in a machine-readable storage medium, such as the memory of a manufacturer's server, an application store's server, or an intermediary server.

A person skilled in the art related to the present embodiment will understand that the above-described description can be implemented in a modified form without departing from the essential characteristics thereof. Therefore, the disclosed methods should be considered from an explanatory rather than a restrictive perspective. The scope of the present invention is indicated by the claims, not the foregoing description, and all differences within the scope equivalent thereto should be construed as being included in the present invention.

### DESCRIPTION OF THE NUMERAL REFERENCES

| | | | |
|---|---|---|---|
| 100: | Device | 120: | Processor |
| 110: | Receiving Unit | | |
| 130: | Control Unit | | |
| 300: | Bucket | | |
| 310: | Actuator | 320: | Electric Motor |
| 330: | Brake | | |
| 410: | Final saved torque value (valid state) | | |
| 420: | Standby torque value | | |
| 500: | First position relationship to bucket | | |
| 510: | Second position relationship to bucket | | |
| 501: | First expected torque value | | |
| 511: | Second expected torque value | | |
| 600: | Output unit | | |
| 601: | Final saved torque value (invalid state) | | |
| 602: | Final expected torque value | | |
| 800: | Excavator | | |
| 810: | User Device | 820: | Database |

## Claims

1. A method for controlling an excavator using a standby torque value, comprising:
obtaining, by a receiving unit, apparatus status information including at least one of weight information, position information, and torque value information according to movement for one or more working apparatuses including at least one of a boom, an arm, and a bucket included in an excavator;
indicating, by a processor, a torque value corresponding to a time when a brake is applied to the one or more working apparatuses, and determining whether a final saved torque value obtained based on torque value information according to movement is valid;
determining, by the processor, if the final saved torque value is valid, the final saved torque value as a standby torque value required for the one or more working apparatuses to maintain the current position state; and
controlling, by a control unit, the one or more working apparatuses based on the standby torque value at a time when the brake is released, which is a time after the time when the brake is applied.

2. The method of claim 1,
wherein the determining whether the final saved torque value is valid is
determining whether the final saved torque value is valid based on at least one of whether the final saved torque value is saved in a memory, the time elapsed since the final saved torque value was saved in the memory, or whether positions of the one or more working apparatuses have been updated since the final saved torque value was saved in the memory.

3. The method of claim 1,
further comprising, if the final saved torque value is invalid:
obtaining a standby torque value table including a plurality of standby torque values expected in response to a plurality of positional relationships of the one or more working apparatuses; and
determining a final expected torque value determined using the standby torque value table as the standby torque value.

4. The method of claim 3,
wherein the determining the final expected torque value as the standby torque value comprises:
determining a first positional relationship representing a positional relationship of the one or more working apparatuses at a time when the brake is applied;
determining a second positional relationship representing a positional relationship of the one or more working apparatuses at a time when the brake is released;
determining a first expected torque value corresponding to the first positional relationship based on the standby torque value table;
determining a second expected torque value corresponding to the second positional relationship based on the standby torque value table; and
determining the final expected torque value based on the final saved torque value, the first expected torque value, and the second expected torque value.

5. The method of claim 4,
wherein the determining the final expected torque value based on the final saved torque value, the first expected torque value, and the second expected torque value is
determining the final expected torque value such that a ratio between the first expected torque value and the second expected torque value and a ratio between the final saved torque value and the final expected torque value correspond to each other.

6. The method of claim 5,
wherein the determining the final expected torque value further comprises:
obtaining first bucket weight information representing the weight information for the bucket at the time when the brake is applied;
obtaining second bucket weight information representing the weight information for the bucket at the time when the brake is released; and
determining the final expected torque value by reflecting the comparison result for the first and second bucket weight information.

7. The method of claim 6,
further comprising updating the standby torque value determined according to the determined final expected torque value to a corresponding one of the plurality of standby torque values included in the standby torque value table.

8. The method of claim 1,
further comprising, if the final saved torque value is invalid,
determining a maximum torque value of an electric motor included in the one or more working apparatuses as the standby torque value.

9. The method of claim 1,
further comprising, if the final saved torque value is invalid:
determining a second positional relationship representing a positional relationship of the one or more working apparatuses at a time when the brake is released;
obtaining center of gravity information for the one or more working apparatuses according to the second positional relationship;
determining a final calculated torque value based on the center of gravity information; and
determining the final calculated torque value as the standby torque value.

10. The method of claim 9,
wherein the determining the final calculated torque value comprises:
determining a first positional relationship representing a positional relationship of the one or more working apparatuses at a time when the brake is applied;
obtaining at least one of acceleration information or angular rate information for the one or more working apparatuses as the one or more working apparatuses change from the first positional relationship to the second positional relationship; and
determining the final calculated torque value based on at least one of the center of gravity information and the acceleration information or the angular rate information.

11. A device for controlling an excavator using a standby torque value, comprising:
a receiving unit for obtaining apparatus status information including at least one of weight information, position information, and torque value information according to movement for one or more working apparatuses including at least one of a boom, an arm, and a bucket included in an excavator;
a processor for indicating a torque value corresponding to a time when a brake is applied to the one or more of the working apparatuses, determining whether a final saved torque value obtained based on torque value information according to movement is valid, and if the final saved torque value is valid, determining the final saved torque value as a standby torque value required for the one or more working apparatuses to maintain a current position state; and
a control unit for controlling the one or more working apparatuses based on the standby torque value at a time when the brake is released, which is a time after the time when the brake is applied.

12. A computer-readable recording medium on which a program for executing the method of claim 1 on a computer is recorded.

13. A computer program saved on a recording medium, the computer program including a program code for implementing the method of claim 1.
